# EUROPEAN PATENT APPLICATION

(11) **EP 3 929 810 A2**
(43) Date of publication of application: **29.12.2021**
(21) Application number: 21206273.1
(22) Date of filing: 03.11.2021
(51) Int. Cl.: G06K 9/00

(54) **METHOD AND APPARATUS FOR IDENTIFYING IMAGE AND ELECTRONIC DEVICE**

(30) Priority: 17.11.2020 CN 202011285559
(71) Applicant: Apollo Intelligent Connectivity (Beijing) Technology Co., Ltd., Beijing 100176 (CN)
(72) Inventor: JIN, Guojing, Beijing, 100176 (CN); LEI, Yu, Beijing, 100176 (CN); SHANG, Xingqi, Beijing, 100176 (CN); ZUO, Xiong, Beijing, 100176 (CN); CHEN, Yan, Beijing, 100176 (CN); GAO, Sirui, Beijing, 100176 (CN); YU, Yuantuo, Beijing, 100176 (CN); JIANG, Kangli, Beijing, 100176 (CN); WANG, Yawei, Beijing, 100176 (CN)
(74) Representative: Bergadano, Mirko

(57) **Abstract**

A method and an apparatus for identifying an image and an electronic device are provided in the present disclosure, which relates to the field of image recognition technology. The method for identifying the image is specifically implemented as follows: acquiring a first face image, where the first face image is one face image; acquiring face depth information about the first face image; and identifying whether a face in the first face image is masked in accordance with the face depth information. In this way, whether the face in the first face image is masked is identified in accordance with face depth information about the one face image, so as to improve the accuracy of identification.

## Description

### TECHNICAL FIELD

The present disclosure relates to the field of image identification technology in the computer field, in particular to a method and an apparatus for identifying an image and an electronic device.

### BACKGROUND

Facial recognition technology has been widely used in such field as payment, access control and registration, which facilitates people's work and life. In order to ensure a success rate of facial recognition, it is necessary to determine whether a user's face is masked, and remind the user to remove a mask in the case that the face is masked. Recognition of masked face is especially important when inputting a face image into an underlying library. In the case that a face in the face image inputted into the underlying library is masked, the accuracy of the subsequent facial recognition may be greatly reduced.

### SUMMARY

A method and an apparatus for identifying an image and an electronic device are provided in the present disclosure.

According to a first aspect of the present disclosure, a method for identifying an image is provided, including: acquiring a first face image, where the first face image is one face image; acquiring face depth information about the first face image; and identifying whether a face in the first face image is masked in accordance with the face depth information.

According to a second aspect of the present disclosure, an apparatus for identifying an image is provided, including: a first acquisition module, configured to acquire a first face image, where the first face image is one face image; a second acquisition module, configured to acquire face depth information about the first face image; and an identification module, configured to identify whether a face in the first face image is masked in accordance with the face depth information.

According to a third aspect of the present disclosure, an electronic device is provided, including: at least one processor and a memory communicatively coupled to the at least one processor. The memory stores thereon an instruction that is executable by the at least one processor, and the instruction, when executed by the at least one processor, causes the at least one processor to perform the method in the first aspect.

According to a fourth aspect of the present disclosure, a non-transitory computer-readable storage medium is provided, which store a computer instruction thereon. The computer instruction is configured to be executed to cause a computer to perform the method in the first aspect.

According to a fifth aspect of the present disclosure, a computer program product is provided, which comprises a computer program that, when executed by a computer, causes the computer to implement the method in the first aspect.

It should be appreciated that the content described in this section is not intended to identify key or important features of the embodiments of the present disclosure, nor is it intended to limit the scope of the present disclosure. Other features of the present disclosure are easily understood based on the following description.

### BRIEF DESCRIPTION OF THE DRAWINGS

The accompanying drawings are used for better understanding of solutions, but shall not be construed as limiting the present disclosure. In these drawings,
Fig. 1 is a flow chart illustrating a method for identifying an image according to an embodiment of the present disclosure;
Fig. 2 is a structural diagram of an apparatus for identifying an image according to an embodiment of the present disclosure; and
Fig. 3 is a block diagram of an electronic device used to implement the method for identifying the image in the embodiment of the present disclosure.

### DETAILED DESCRIPTION

The following describes exemplary embodiments of the present disclosure with reference to accompanying drawings. Various details of the embodiments of the present disclosure are included to facilitate understanding, and should be considered as being merely exemplary. Therefore, those of ordinary skill in the art should be aware that various changes and modifications can be made to the embodiments described herein without departing from the scope and spirit of the present disclosure. Likewise, for clarity and conciseness, descriptions of well-known functions and structures are omitted below.

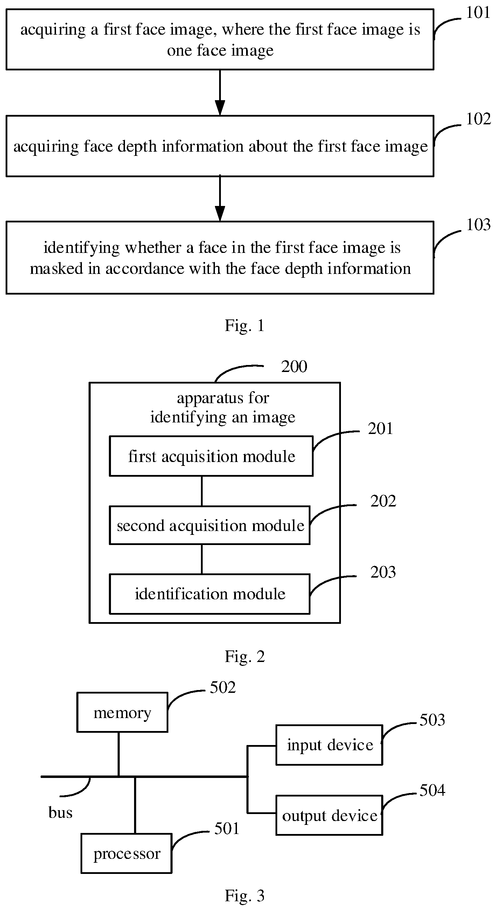

Reference is made to Fig. 1, which is a flow chart illustrating a method for identifying an image according to an embodiment of the present disclosure. As shown in Fig. 1, the method for identifying the image according to the embodiment includes the following steps.

Step 101, acquiring a first face image, where the first face image is one face image.

The first face image may be acquired by a camera, for example, through capturing a face, or through clipping a face image from a captured image after capturing a person by using the camera, which is not particularly defined herein. The first face image is a single face image. The first face image may be an RGB (where R denotes red, G denotes green, and B denotes blue) image, or an infrared radiation (IR) image.

Step 102, acquiring face depth information about the first face image.

The face depth information about the first face image may be acquired by using a computer visual algorithm or a deep learning algorithm. The face depth information may be understood as depth information about the first face image, or depth information about a face in the first face image.

Step 103, identifying whether a face in the first face image is masked in accordance with the face depth information.

During identifying in accordance with the face depth information, comparison with face depth information about a reference image may be made. The reference image may be a face image of which a face is masked, or a face image of which a face is not masked. In the case that the reference image is the face image of which the face is not masked, when a matching degree between the face depth information about the first face image and the face depth information about the reference image is higher than a preset threshold, it is determined that the face in the first face image is not masked; and when the matching degree between the face depth information about the first face image and the face depth information about the reference image is not higher than the preset threshold, it is determined that the face in the first face image is masked.

In the case that the reference image is the face image of which the face is masked, when the matching degree between the face depth information about the first face image and the face depth information about the reference image is higher than a preset threshold, it is determined that the face in the first face image is masked; and when the matching degree between the face depth information about the first face image and the face depth information about the reference image is not higher than the preset threshold, it is determined that the face in the first face image is not masked.

Whether the face in the first face image is masked may be identified in accordance with the face depth information about the first face image by using a computer visual algorithm or a deep learning algorithm. For example, in the case that a face in an image is masked, face depth information is discontinuous. The face depth information about the first face image may be identified by using a trained recognition model, so as to acquire an identification result of whether the face in the first face image is masked.

In the embodiment, the first face image is acquired, where the first face image is one face image, the face depth information about the first face image is acquired, and whether the face in the first face image is masked is identified in accordance with the face depth information. In this way, whether the face in the first face image is masked is identified in accordance with face depth information about the one face image, so as to improve the accuracy of identification and reduce a probability of misidentification. In addition, identification may be performed only based on the one face image, so as to simplify the identification process and improve the identification efficiency.

In the above, subsequent to the identifying whether the face in the first face image is masked in accordance with the face depth information, the method further includes: when it is identified that the face in the first face image is not masked, acquiring a second face image, and performing facial recognition or face registration in accordance with the second face image, where the second face image comprises a face image captured after the first face image is captured.

The second face image may be captured by using a camera. For example, after capturing the first face image by using the camera, when it is identified that the face in the first face image is not masked, an electronic device (the method in the present disclosure may be applied to the electronic device) may perform facial recognition or face registration on the second face image captured by the camera, that is, the second face image is the face image captured after the first face image is captured. The second face image may include one or more face images, which may be specifically determined according to practical needs. When it is identified that the face in the first face image is not masked, the second face image may further include the first face image.

When it is identified that the face in the first face image is not masked, it is considered that the face at this time is valid, and the face image may be captured subsequently by using the camera, that is, the second face image is acquired. Then, facial recognition or face registration may be performed based on the second face image. In this way, it is able to avoid that the facial recognition or face registration is performed on a face image in which a face is masked, which may adversely affects the accuracy of facial recognition.

In an embodiment, subsequent to the identifying whether the face in the first face image is masked in accordance with the face depth information, when it is identified that the face in the first face image is not masked, the second face image is acquired, and the facial recognition or face registration is performed in accordance with the second face image, where the second face image includes the face image captured after the first face image is captured. In this way, it is able to avoid that the facial recognition or face registration is performed on a face image in which a face is masked, which may adversely affects the accuracy of facial recognition.

In the above, subsequent to the identifying whether the face in the first face image is masked in accordance with the face depth information, the method further includes: when it is identified that the face in the first face image is masked, outputting prompt information, where the prompt information is used to remind a user to remove a mask.

When it is identified that the face in the first face image is masked, the prompt information is outputted, so as to remind the user to remove the mask. A face image may be captured by using a camera on a first electronic device every first preset time period and it is identified that whether a face in the face image is masked. When it is recognized that the face in the face image is not masked, the prompt information is not displayed, and steps of the acquiring the second face image and performing facial recognition or face registration in accordance with the second face image when it is identified that the face in the first face image is not masked are performed. The first preset time period may be, but not limited to, 1 second or 0.5 second.

The prompt information may also be canceled after a second preset time period, such as 5 seconds.

Further, when it is identified that the face in the first face image is masked, a masked position may be further determined. For example, a masked part is a forehead, a left face, a corner of a mouth, or a chin, etc. The masked part may be added into the prompt information, so as to remind the user of which part of the face the mask is located on.

In an embodiment, when it is identified that the face in the first face image is masked, the prompt information is outputted, and the prompt information is used to remind the user to remove the mask, so as to remind the user of that the face image currently acquired by the electronic device is masked and the mask needs to be removed, thereby to improve the efficiency of the acquisition of a qualified face image. The qualified face image is a face image where a face is not masked.

In the above, the acquiring the face depth information about the first face image includes: inputting the first face image into a first network model, to acquire the face depth information about the first face image; and the identifying whether the face in the first face image is masked in accordance with the face depth information includes: inputting the first face image and the face depth information into a second network model, to acquire an identification result of whether the face in the first face image is masked.

In the embodiment, the face depth information about the first face image may be acquired by using the first network model, and whether the face is masked is identified based on the face depth information by using the second network model.

The first network model and the second network model need to be trained by using samples before putting into use. A training process of the first network model includes: acquiring a first sample image and first face depth information corresponding to the first sample image; inputting the first sample image into a first basic network model, to acquire predicted face depth information; determining a loss function in accordance with the first face depth information and the predicted face depth information; and adjusting parameters of the first basic network model based on the loss function, to acquire the first network model.

The first face depth information may be acquired by using a computer vision algorithm, and the first basic network model may be a deep learning model. The first basic network model may be trained by using the first sample image and the first face depth information, so as to acquire the first network model.

A training process of the second network model includes: acquiring second face depth information corresponding to a second sample image, the second sample image including a first image labelled as masked and a second image labelled as not masked; training a second basic network model by using the second sample image and the second face depth information, to acquire the second network model.

The second face depth information may be determined through the first network model. For example, the second sample image is inputted into the first network model, so as to acquire the second face depth information. The second basic network model is trained by using the second sample image and the corresponding second face depth information, so as to acquire the second network model. The second network model outputs an identification result of whether there is a mask in an image. The second basic network model may be a neural network model.

In the above, both the first sample image and the second sample image are face images. Both the first face depth information and the second face depth information may be depth maps.

After the training of the first network model and the second network model is finished, the face depth information about the first face image may be inputted into the first network model, so as to acquire the face depth information about the first face image, such as a depth map of the face image. Then, the first face image and the face depth information may be inputted into the second network model, so as to acquire the identification result of whether the face in the first face image is masked.

In the embodiments, the face depth information about the first face image is acquired by using the first network model, and whether the face in the first face image is masked is identified based on the face depth information through the second network model, so as to realize identifying whether the face in the face image is masked based on the one face image, thereby to simplify the identification process and improve the identification efficiency.

Reference is made to Fig. 2, which is a block diagram of an apparatus for identifying an image according to an embodiment of the present application. As shown in Fig. 2, the apparatus 200 for identifying the image according to embodiment includes: a first acquisition module 201, configured to acquire a first face image, where the first face image is one face image; a second acquisition module 202, configured to acquire face depth information about the first face image; and an identification module 203, configured to identify whether a face in the first face image is masked in accordance with the face depth information.

Further, the apparatus 200 for identifying the image includes: a third acquisition module, configured to, when it is identified that the face in the first face image is not masked, acquire a second face image, and perform facial recognition or face registration in accordance with the second face image, where the second face image comprises a face image captured after the first face image is captured.

Further, the apparatus 200 for identifying the image includes: a prompting module, configured to output prompt information when it is identified that the face in the first face image is masked, where the prompt information is configured to remind a user to remove a mask.

Further, the second acquisition module 202 is further configured to input the first face image into a first network model, to acquire the face depth information about the first face image; and the identification module is further configured to input the first face image and the face depth information into a second network model, to acquire an identification result of whether the face in the first face image is masked.

In the apparatus 200 for identifying the image, the first face image is acquired, where the first face image is one face image, the face depth information about the first face image is acquired, and whether the face in the first face image is masked is identified in accordance with the face depth information. In this way, whether the face in the first face image is masked is identified in accordance with face depth information about the one face image, so as to improve the accuracy of identification and reduce a probability of misidentification.

According to the embodiment of the present disclosure, an electronic device, and a readable storage medium are further provided

As shown in Fig. 3, a block diagram of an electronic device for implementing the method for identifying the image according an embodiment of the present disclosure is shown. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as personal digital assistant, cellular telephones, smart phones, wearable devices, and other similar computing devices. The components shown herein, their connections and relationships, and their functions are by way of example only and are not intended to limit the implementations of the present disclosure described and/or claimed herein.

As shown in Fig. 3, the electronic device includes: one or more processors 501, a memory 502, and interfaces for connecting various components, including a high-speed interface and a low-speed interface. The various components are interconnected using different buses and may be mounted on a common motherboard or otherwise mounted as desired. The processors may process instructions for execution within the electronic device, including instructions stored in the memory or on the memory to display graphical information of GUI on an external input/output device, such as a display device coupled to the interface. In other embodiments, multiple processors and/or multiple buses may be used with multiple memories, if necessary. Also, multiple electronic devices may be connected, each providing some of the necessary operations (e.g., as an array of servers, a set of blade servers, or a multiprocessor system). In Fig. 3, an example of one processor 501 is illustrated.

The memory 502 is a non-transitory computer-readable storage medium provided herein. The memory has stored thereon instructions executable by the at least one processor to cause the at least one processor to perform the method for identifying the image in the present disclosure. The non-transitory computer-readable storage medium of the present disclosure has stored thereon computer instructions for causing a computer to perform the method for identifying the image in the present disclosure.

The memory 502, as a non-transitory computer-readable storage medium, may be used to store non-transitory software programs, non-transitory computer-executable programs, and modules, such as program instructions/modules (e.g., the first acquisition module 201, the second acquisition module 202 and the identification module 203 shown in Fig. 2) corresponding to the method for identifying the image in the embodiments of the present the present. By running non-transitory software programs, instructions and modules stored in the memory 502, the processor 501 executes various functional applications and data processing of the server, i.e. implements the method for identifying the image in the method embodiment described above.

The memory 502 may include a program storage area and a data storage area, where the program storage area may store an operating system, and application programs for at least one function; and the data storage area may store data created according to the use of the electronic device implementing the method for identifying the image. In addition, the memory 502 may include a high speed random access memory, and may also include a non-transitory memory, such as at least one disk storage device, flash memory device, or other non-transitory solid state memory device. In some embodiments, the memory 502 may alternatively include a memory remotely located with respect to the processor 501, which may be connected via a network to the electronic device implementing the method for identifying the image. Examples of the network mentioned above include, but are not limited to, the Internet, intranets, local area networks, mobile communication networks, and combinations thereof.

The electronic device implementing the method for identifying the image may further include: an input device 503 and an output device 504. The processor 501, the memory 502, the input device 503, and the output device 504 may be connected to each other via a bus or in other ways. In Fig. 3, a bus for connection is taken as an example.

The input device 503 may receive input numeric or character information and generate key signal inputs related to user settings and functional controls of the electronic device implementing the method for identifying the image. For example, the input device may include a touch screen, a keypad, a mouse, a trackpad, a touch pad, a pointing stick, one or more mouse buttons, a trackball, a joystick, etc. The output device 504 may include a display device, an auxiliary lighting device (e.g., LED), a tactile feedback device (e.g., a vibration motor), etc. The display device may include, but is not limited to, a liquid crystal display (LCD), a light emitting diode (LED) display, and a plasma display. In some embodiments, the display device may be a touch screen.

Various embodiments of the systems and techniques described herein may be implemented in digital electronic circuitry, integrated circuit systems, application-specific integrated circuits (ASICs), computer hardware, firmware, software, and/or combinations thereof. These various embodiments may include implementation in one or more computer programs that may be executed and/or interpreted on a programmable system including at least one programmable processor, which may be a dedicated or general purpose programmable processor, that may receive data and instructions from a storage system, at least one input device and at least one output device, and transmit the data and the instructions to the storage system, the at least one input device and the at least one output device.

These computing programs (also referred to as programs, software, software applications, or codes) include machine instructions of a programmable processor, and may be implemented using high-level procedural and/or object-oriented programming languages, and/or assembly/machine languages. As used herein, the terms "machine-readable medium" and "computer-readable medium" refer to any computer program product, apparatus, and/or device (e.g., magnetic disk, optical disk, memory, programmable logic device (PLD)) for providing machine instructions and/or data to a programmable processor, including a machine-readable medium that receives machine instructions as machine-readable signals. The term "machine-readable signal" refers to any signal used to provide machine instructions and/or data to a programmable processor.

To provide interaction with a user, the systems and techniques described herein may be implemented on a computer having: a display device (e.g., a cathode ray tube (CRT) or liquid crystal display (LCD) monitor) for displaying information to a user; and a keyboard and a pointing device (e.g., a mouse or a trackball) through which a user may provide input to the computer. Other types of devices may also be used to provide interaction with a user; for example, the feedback provided to the user may be any form of sensory feedback (e.g., visual feedback, auditory feedback, or tactile feedback); and input from the user may be received in any form, including acoustic input, voice input, or tactile input.

The systems and techniques described herein may be implemented in a computing system that includes a background component (e.g., as a data server), or a computing system that includes a middleware component (e.g., an application server), or a computing system that includes a front-end component (e.g., a user computer having a graphical user interface or a web browser through which a user may interact with embodiments of the systems and techniques described herein), or a computing system that includes any combination of such background components, middleware components, or front-end components. The components of the system may be interconnected by any form or medium of digital data communication (e.g., a communication network). Examples of communication networks include: Local Area Networks (LANs), Wide Area Networks (WANs), and the Internet.

The computer system may include a client and a server. The client and server are typically far away from each other and typically interact through a communication network. The relationship of the client and the server is generated by computer programs running on respective computers and having a client-server relationship with each other.

In the present disclosure, the first face image is acquired, where the first face image is one face image, the face depth information about the first face image is acquired, and whether the face in the first face image is masked is identified in accordance with the face depth information. In this way, whether the face in the first face image is masked is identified in accordance with face depth information about the one face image, so as to improve the accuracy of identification and reduce a probability of misidentification.

Subsequent to the identifying whether the face in the first face image is masked in accordance with the face depth information, when it is identified that the face in the first face image is not masked, the second face image is acquired, and the facial recognition or face registration is performed in accordance with the second face image, where the second face image includes the face image captured after the first face image is captured. In this way, it is able to avoid that the facial recognition or face registration is performed on a face image in which a face is masked, which may adversely affects the accuracy of facial recognition.

When it is identified that the face in the first face image is masked, the prompt information is outputted, and the prompt information is configured to remind the user to remove the mask, so as to remind the user of that the face image currently acquired by the electronic device is masked and the mask needs to be removed, thereby to improve the efficiency of the acquisition of a qualified face image. The qualified face image is a face image where a face is not masked.

The face depth information about the first face image may be acquired by using the first network model, and whether the face in the first face image is masked is identified based on the face depth information through the second network model, so as to realize identifying whether the face in the face image is masked based on the one face image, thereby to simplify the identification process and improve the identification efficiency.

It should be appreciated that the various forms of flows described above may be used, and the steps may be reordered, added or deleted. For example, the steps recited in the present disclosure may be performed in parallel or sequentially or may be performed in a different order, so long as the desired results of the technical solutions disclosed in the present disclosure can be achieved, and no limitation is made herein.

The above-described embodiments are not construed as a limitation to the scope of the present disclosure. It will be apparent to those skilled in the art that various modifications, combinations, sub-combinations and substitutions can be performed based on design requirements and other factors. Any modifications, equivalents, and improvements within the spirit and principle of the present disclosure shall fall within the protection scope of the present disclosure.

## Claims

1. A method for identifying an image, **characterized by** comprising:
acquiring (101) a first face image, wherein the first face image is one face image;
acquiring (102) face depth information about the first face image; and
identifying (103) whether a face in the first face image is masked in accordance with the face depth information.

2. The method according to claim 1, wherein subsequent to the identifying (103) whether the face in the first face image is masked in accordance with the face depth information, the method further comprises:
when it is identified that the face in the first face image is not masked, acquiring a second face image, and performing facial recognition or face registration in accordance with the second face image, wherein the second face image comprises a face image captured after the first face image is captured.

3. The method according to claim 1 or 2, wherein subsequent to the identifying (103) whether the face in the first face image is masked in accordance with the face depth information, the method further comprises:
when it is identified that the face in the first face image is masked, outputting prompt information, wherein the prompt information is used to remind a user to remove a mask.

4. The method according to claim 1 or 2, wherein the acquiring (102) the face depth information about the first face image comprises:
inputting the first face image into a first network model, to acquire the face depth information about the first face image; and
the identifying (103) whether the face in the first face image is masked in accordance with the face depth information comprises:
inputting the first face image and the face depth information into a second network model, to acquire an identification result of whether the face in the first face image is masked.

5. An apparatus for identifying an image, **characterized by** comprising:
a first acquisition module (201), configured to acquire a first face image, wherein the first face image is one face image;
a second acquisition module (202), configured to acquire face depth information about the first face image; and
an identification module (203), configured to identify whether a face in the first face image is masked in accordance with the face depth information.

6. The apparatus according to claim 5, further comprising:
a third acquisition module, configured to, when it is identified that the face in the first face image is not masked, acquire a second face image, and perform facial recognition or face registration in accordance with the second face image, wherein the second face image comprises a face image captured after the first face image is captured.

7. The apparatus according to claim 5 or 6, further comprising:
a prompting module, configured to output prompt information when it is identified that that the face in the first face image is masked, wherein the prompt information is used to remind a user to remove a mask.

8. The apparatus according to claim 5 or 6, wherein the second acquisition module (202) is further configured to input the first face image into a first network model, to acquire the face depth information about the first face image; and
the identification module (203) is further configured to input the first face image and the face depth information into a second network model, to acquire an identification result of whether the face in the first face image is masked.

9. An electronic device, **characterized by** comprising:
at least one processor (501); and
a memory (502) communicatively coupled to the at least one processor (501); wherein,
the memory (502) stores thereon an instruction that is executable by the at least one processor (501), and the instruction, when executed by the at least one processor (501), causes the at least one processor (501) to perform the method according to any one of claims 1 to 4.

10. A non-transitory computer-readable storage medium having a computer instruction thereon, **characterized in that** the computer instruction is configured to be executed to cause a computer to perform the method according to any one of claims 1 to 4.

11. A computer program product, **characterized by** comprising a computer program that, when executed by a computer, causes the computer to implement the method according to any one of claims 1 to 4.
